# FASCICULE DE BREVET EUROPEEN

(11) **EP 2 518 882 B1**
(45) Date de publication et mention de la délivrance du brevet: **09.05.2018**
(21) Numéro de dépôt: 12161541.3
(22) Date de dépôt: 27.03.2012
(51) Int. Cl.: H02M 7/217

(54) **Convertisseur CA/CC**
Wechselstrom-Gleichstromwandler
AC/DC converter

(30) Priorité: 05.04.2011 FR 1152900
(43) Date de publication de la demande: 31.10.2012
(73) Titulaire: Atlantic Industrie, 85000 La Roche sur Yon (FR)
(72) Inventeur: Bony, Yves, 85170 Dompierre sur Yon (FR)
(74) Mandataire: Cabinet Chaillot

(56) Documents cités:
- EP-A2- 0 651 499
- WO-A1-2007/105189
- DE-A1- 3 501 519
- US-A- 5 587 895
- FERRERES A ET AL: "Universal input voltage AC/DC converter with low output voltage and compliance with IEC-1000-3-2", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 2, 17 juin 2001 (2001-06-17), pages 678-682, XP010559307, DOI: 10.1109/PESC.2001.954196 ISBN: 978-0-7803-7067-8

## Description

L'invention porte sur un convertisseur CA/CC d'alimentation.

Les convertisseurs CA/CC d'alimentation sont très largement utilisés dans l'industrie.

Ils servent notamment à alimenter en courant continu des cartes électroniques pilotant tous types d'appareils électriques, par exemple des appareils de type chauffe-eau, climatiseur, convecteur, chaudière, à partir de la tension alternative fournie par le secteur (réseau de distribution d'énergie 230/400 V).

Un premier type connu de convertisseur CA/CC d'alimentation est l'alimentation à transformateur linéaire.

Ce premier type de convertisseur CA/CC d'alimentation présente plusieurs inconvénients. Un premier inconvénient de l'alimentation à transformateur linéaire est la plage limitée de tension alternative d'entrée. Cette limitation a pour conséquence qu'une erreur de branchement du convertisseur CA/CC sur le secteur peut engendrer une destruction du transformateur et/ou de la charge branchée en sortie du convertisseur CA/CC. Une deuxième limitation de l'alimentation à transformateur linéaire est la consommation de celle-ci en mode arrêt, due aux bobines d'inductance. Une dernière limitation de l'alimentation à transformateur linéaire est son encombrement.

Une variante de ce type de convertisseur CA/CC d'alimentation utilise deux transformateurs linéaires différents, afin d'autoriser une plage de tension d'entrée plus importante. Si cette variante permet de pallier l'inconvénient relatif à la plage de tension d'entrée, elle ne résout en revanche pas les problème de consommation en mode arrêt et d'encombrement global du transformateur CA/CC.

Un deuxième type connu de convertisseur CA/CC d'alimentation est l'alimentation à découpage.

L'alimentation à découpage présente de nombreux avantages par rapport à l'alimentation à transformateur linéaire.

Les alimentations à découpage ont en effet une plus grande plage de tension d'entrée, une faible consommation en mode arrêt, due à la présence de l'élément de commutation, et un encombrement réduit par rapport à l'alimentation à transformateur linéaire, ce qui fait que les alimentations à découpage sont de plus en plus utilisées dans l'industrie. Elles présentent en outre un meilleur rendement.

Il existe notamment des alimentations à découpage sous forme de circuits intégrés, mais celles-ci, adaptées aux tensions alternatives de réseaux de type nord-américain, présentent une limitation de la tension d'entrée à 265 VAC, qui les rendent inutilisables directement sur un réseau de type européen ayant une tension d'amplitude plus élevée. Une deuxième limitation de ces alimentations à découpage existantes est la fréquence de découpage élevée qui peut entraîner des émissions parasites.

Il est également important de souligner que, dans le cadre de la tendance actuelle de limitation de la consommation électrique des appareils en mode arrêt, il est souhaitable d'obtenir des convertisseurs CA/CC d'alimentation avec une consommation en mode arrêt inférieure à 0,5 W.

La demande de brevet européen EP 0 651 499 A2 divulgue un convertisseur CA/CC utilisant un commutateur non-verrouillant pour convertir une tension alternative en une tension continue et pour piloter une charge, ledit convertisseur CA/CC comprenant un moyen de redressement, un dispositif de commutation principal, un circuit d'alimentation série, un moyen de commande du dispositif de commutation principal, et un moyen d'amplification.

La demande de brevet allemand DE 35 01 519 A1 divulgue un dispositif électronique pour la réduction de la perte de puissance durant la génération d'une tension CC stabilisée ou d'un courant CC stabilisé à partir d'une source de tension CA.

La demande de brevet américain US 5 587 895 A divulgue une alimentation de puissance électrique avec une sortie unique à partir d'une large plage de tensions d'entrée, qui utilise un redresseur connecté à l'entrée d'un transistor MOSFET de commutation.

Il existe donc à l'heure actuelle un besoin pour des convertisseurs CA/CC d'alimentation à faible consommation en mode arrêt, avec une plage de tension d'entrée élevée et à faible encombrement, pouvant être produits en série à bas coût, pour résoudre les problèmes de l'état antérieur de la technique.

Le convertisseur CA/CC de l'invention associe deux étages :
- un premier étage hacheur, abaisseur, redresseur et régulateur de tension ; et
- un deuxième étage constitué d'une alimentation à découpage classique, gérée par un circuit intégré (par exemple un composant type LNK306GN de la société Power Intégration).

Un étage de filtre peut facultativement être prévu entre les deux étages.

Le premier étage permet d'adapter la tension VAC d'entrée (provenant du réseau électrique source, aussi appelé dans ce qui suit le secteur) à la plage d'entrée du circuit intégré du deuxième étage. Le deuxième étage découpe ainsi une tension inférieure à la tension du réseau électrique source. Les appels de courant lors du découpage sont ainsi moins importants, ce qui permet de diminuer les perturbations liées aux appels de courant d'entrée lors du découpage. De plus, le premier étage découpe à la fréquence basse du réseau électrique source (40 Hz à 70 Hz) la demi-sinusoïde de la tension d'entrée, ce qui limite les émissions parasites rencontrées lors d'un découpage haute fréquence.

Le premier étage permet également de s'adapter à la puissance consommée par la charge reliée à l'alimentation dans les différents modes de fonctionnement.

Le deuxième étage peut être en topologie non isolée (configuration Buck) ou en topologie isolée (configuration Flyback).

L'élément de commutation du premier étage est avantageusement un transistor MOS, ou un thyristor. Cependant, du fait que le thyristor nécessite un courant un plus important pour son fonctionnement, on préférera l'utilisation d'un transistor MOS, qui présente une consommation inférieure au repos.

L'association des deux étages permet de garder les performances des circuits classiques, en termes de rendement d'entrée/sortie, de protection en tension et de protection en surcharge.

De plus, avec cette association des deux étages, comme indiqué plus haut, les filtrages CEM (compatibilité électromagnétique) sont limités, du fait que le premier étage hache la tension d'entrée mono-alternance (demi-sinusoïde de la tension alternative d'entrée du réseau électrique source) à basse fréquence (40 à 70 Hz).

Le circuit de l'invention peut être avantageusement utilisé pour une alimentation d'un dispositif à partir d'un réseau électrique mono et/ou triphasé.

Le circuit de l'invention peut fonctionner sous des tensions importantes, notamment sous 440 V RMS, soit 622 V crête à crête.

La présente invention a donc pour objet un convertisseur alternatif/continu (CA/CC), convertissant une tension alternative délivrée entre une première phase et une deuxième phase d'une source de tension alternative connectée en entrée du convertisseur CA/CC en une tension continue appliquée à une charge connectée en sortie du convertisseur CA/CC, ledit convertisseur CA/CC comprenant une alimentation à découpage connectée en sortie à la charge et délivrant à celle-ci une tension continue, caractérisé par le fait que le convertisseur CA/CC comprend en outre un étage redresseur, abaisseur, hacheur connecté en amont de l'alimentation à découpage, ledit étage redresseur, abaisseur, hacheur étant connecté en entrée à la source de tension alternative et en sortie à l'entrée de l'alimentation à découpage, ledit étage redresseur, abaisseur, hacheur fournissant à l'alimentation à découpage une tension redressée, abaissée et hachée par rapport à la tension alternative d'entrée.

Il est ainsi possible d'utiliser une alimentation à découpage classique (notamment sous forme de boîtier de circuits intégrés), avec une tension d'entrée d'amplitude inférieure à la tension fournie par le réseau d'alimentation électrique, permettant ainsi d'avoir une architecture simple et à bas coût.

La première phase de la source de tension alternative d'entrée est par exemple l'une des phases d'une tension triphasée, la deuxième phase de la source de tension alternative d'entrée étant alors l'autre phase ou le neutre de cette tension triphasée.

Selon une première caractéristique particulière, le convertisseur CA/CC peut comprendre en outre un étage intermédiaire de filtre de type bobine d'inductance et condensateur (filtre LC) entre la sortie de l'étage redresseur, abaisseur, hacheur et l'entrée de l'alimentation à découpage pour lisser la tension en sortie de l'étage redresseur, abaisseur, hacheur.

Selon une autre caractéristique particulière, l'étage redresseur, abaisseur, hacheur peut comprendre un premier élément de commutation de type transistor MOS, thyristor ou transistor bipolaire pour hacher de la tension alternative d'entrée fournie par la source de tension alternative d'entrée.

Dans le cas d'un transistor MOS, on appellera borne de commande de l'élément de commutation la grille du transistor MOS, borne d'entrée de l'élément de commutation le drain du transistor MOS et borne de sortie de l'élément de commutation la source du transistor MOS.

L'étage redresseur, abaisseur, hacheur peut aussi comprendre une diode reliée à la première phase de la source de tension alternative d'entrée pour redresser par blocage de l'alternance négative la tension alternative d'entrée fournie par la source de tension alternative d'entrée. On pourrait également envisager de rendre positive l'alternance négative sans s'écarter de la portée de la présente invention.

Le premier étage ne travaille donc que sur une seule alternance de la tension alternative d'entrée. Le découpage de l'alimentation à découpage en sortie du premier étage se fait donc à 50 HZ, et non sur une fréquence plus élevée.

Selon une autre caractéristique particulière, un condensateur peut être connecté entre la sortie du premier élément de commutation dans l'étage redresseur, abaisseur, hacheur et la deuxième phase de la source de tension alternative d'entrée pour lisser la tension en sortie de l'étage redresseur, abaisseur, hacheur.

L'alimentation à découpage peut être de type à topologie isolée (configuration flyback) ou à topologie non isolée (configuration buck).

Une diode peut être connectée entre la sortie du premier élément de commutation et le condensateur connecté en sortie du premier élément de commutation, ladite diode étant passante lors d'une alternance positive de la tension fournie par la source de tension alternative d'entrée et bloquée lors d'une alternance négative de la tension fournie par la source de tension alternative d'entrée et permet d'éviter la décharge des condensateurs dans les éléments en amont.

Une diode Zener peut en outre être connectée entre la sortie du premier élément de commutation et la base d'un transistor bipolaire, dont le collecteur est connecté à la borne de commande du premier élément de commutation et l'émetteur est connecté à la deuxième phase de la source de tension alternative d'entrée, de telle sorte que, lorsque la tension aux bornes du condensateur connecté en sortie du premier élément de commutation est supérieure à la tension Zener de ladite diode Zener plus la tension base-émetteur dudit transistor bipolaire, le transistor bipolaire est saturé et fait passer le premier élément de commutation à l'état bloqué.

Lorsque l'alimentation à découpage est en topologie isolée, celle-ci peut comprendre un transformateur isolant l'entrée et la sortie de l'alimentation à découpage, et un élément de couplage optique isolant les côtés primaire et secondaire du transformateur.

La structure du circuit de l'invention permet de ne pas avoir de condensateur chimique de réserve au niveau de la tension alternative d'entrée ce qui contribue à la fiabilité du circuit de l'invention, ainsi qu'à son faible encombrement et à son faible coût.

De plus, l'élément de commutation (MOS) et la présence de la diode Zener permet d'obtenir une consommation à vide du circuit de l'invention inférieure à 0, 5W.

Pour mieux illustrer l'objet de la présente invention, on va en décrire ci-après plusieurs modes de réalisation, avec référence aux dessins annexés.

Sur ces dessins :
- la Figure 1 est un schéma de circuit d'un convertisseur CA/CC selon un premier mode de réalisation de l'invention ;
- la Figure 2 représente des courbes de tension à différents points du schéma de circuit de la Figure 1 ; et
- la Figure 3 est un schéma de circuit analogue au schéma de circuit de la Figure 1, selon un deuxième mode de réalisation de l'invention.

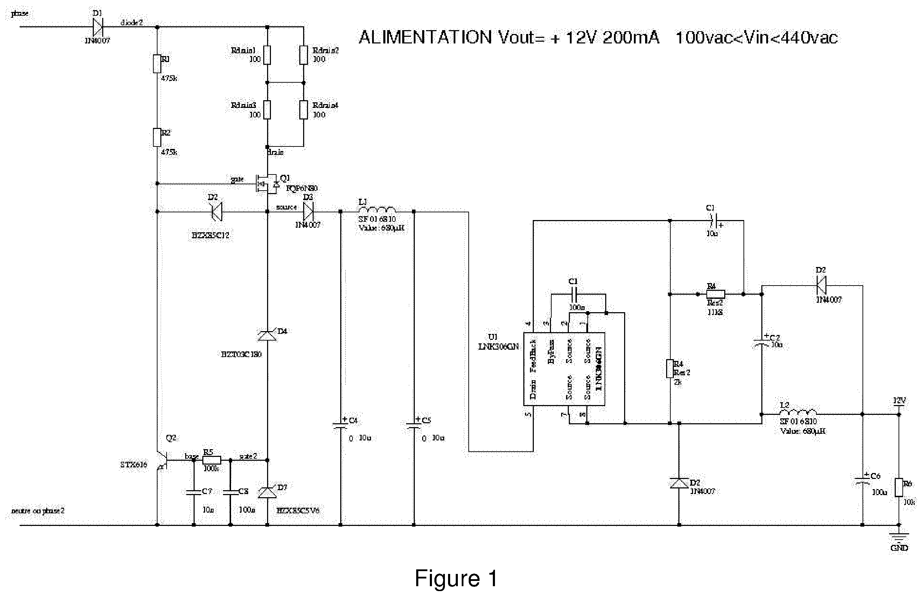

Si l'on se réfère à la Figure 1, on peut voir qu'il y est représenté un schéma de circuit d'un convertisseur CA/CC selon un premier mode de réalisation de l'invention, en topologie non isolée (appelée topologie ou configuration Buck), alimenté en entrée par une tension alternative entre le fil phase et le fil neutre ou phase2, et délivrant en sortie une tension continue à la charge représentée par la résistance R6 sur le schéma de circuit de la Figure 1.

Dans le mode de réalisation représenté sur la Figure 1, on peut distinguer trois étages fonctionnels dans le schéma de circuit.

Un premier étage fonctionnel du schéma de circuit comprend la diode D1, les résistances R1, R2, les résistances Rdrain1, Rdrain2, Rdrain3 et Rdrain4, le transistor MOS Q1, les diodes Zener D2, D4 et D7, le transistor bipolaire Q2, la résistance R5 et les condensateurs C4, C7 et C8.

Un deuxième étage fonctionnel du schéma de circuit comprend la diode D3, la bobine d'inductance L1 et le condensateur C5.

Un troisième et dernier étage fonctionnel comprend l'alimentation à découpage U1 en configuration Buck et l'ensemble des composants en sortie de cette alimentation à découpage U1.

Le fonctionnement du circuit est le suivant. Sur une alternance positive de la tension d'entrée alternative (à gauche du schéma de circuit sur la Figure 1, entre le fil phase et le fil neutre ou phase2), la diode D1 est passante. Les résistances R1 et R2 permettent de rendre passant le transistor MOS Q1. Le transistor MOS Q1 étant passant, les condensateurs C4 et C5 se chargent par l'intermédiaire des résistances de drain Rdrain1, Rdrain2, Rdrain3 et Rdrain4, connectées au drain du transistor Q1, en sortie de la diode D1, la diode D3 étant alors également passante.

Lorsque la tension aux bornes du condensateur C4 atteint une valeur de tension égale à la tension Zener de la diode Zener D4 plus la tension Vbe (tension base-émetteur) du transistor bipolaire Q2 (environ 180V dans l'exemple représenté), la résistance R5 commande la saturation du transistor bipolaire Q2, ce qui provoque le passage à l'état bloqué du transistor Q1, le courant d'entrée passant alors à travers les résistances R1 et R2, puis à travers les diodes Zener D2, D4 et D7 alors en mode avalanche.

Lors d'une alternance négative de la tension d'entrée alternative, la diode D1 placée sur le fil phase du schéma de circuit est bloquée, et empêche une circulation de courant dans le circuit. La tension est redressée par blocage de l'alternance négative.

Toujours lors d'une alternance négative de la tension d'entrée alternative, la diode D3 est à l'état bloquée et empêche la charge stockée dans le condensateur C4 lors de l'alternance positive précédente de repasser vers le premier étage fonctionnel du schéma de circuit de la Figure 1.

L'ensemble L1-C5 constitue un filtre LC classique, lissant de manière classique la tension aux bornes du condensateur C4.

Cet ensemble filtre L1-C5 est facultatif.

La tension aux bornes de C5 (ou aux bornes de C4 lorsque l'étage de filtre L1-C5 n'est pas présent) est découpée de manière classique dans le deuxième étage du circuit pour alimenter la charge R6 en courant continu, suivant un montage connu pour les alimentations à découpage à circuits intégrés.

La tension aux bornes de C5 découpée par l'alimentation à découpage U1 est faible en amplitude, permettant ainsi de limiter les perturbations liées aux appels de courant lors de la commutation dans l'alimentation à découpage U1.

Le temps de conduction de Q1 est proportionnel à la charge du système (R6) et varie avec celle-ci. En mode arrêt, le courant consommé par la charge est faible. Les condensateurs C4 et C5 se déchargent donc lentement. Le rapport, en mode arrêt, entre le temps de conduction de Q1 et le temps de blocage de Q1 est donc très faible. La consommation moyenne en mode arrêt est alors très faible, notamment inférieure à 0,5 W.

Le transistor Q1 hache la tension alternative d'entrée à la fréquence du secteur, c'est-à-dire à basse fréquence (40-70Hz), limitant de ce fait les émissions parasites.

La fonction du premier étage fonctionnel est donc une fonction de hachage, redressement, abaissement.

La fonction du deuxième étage fonctionnel est une fonction de filtre.

La fonction du troisième étage est une fonction de découpage classique.

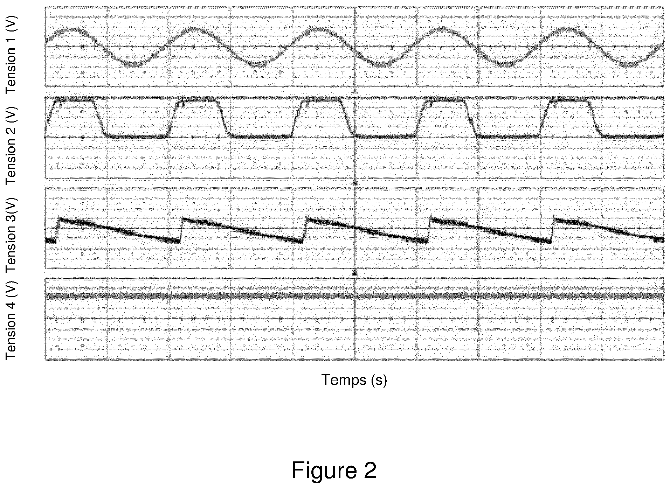

La Figure 2 illustre les tensions en différents points du schéma de circuit de la Figure 1.

La première courbe (Tension 1) de la Figure 1 représente la tension alternative d'entrée (une division représentant pour la première courbe 300V).

La seconde courbe (Tension 2) représente la tension mesurée entre la source du transistor Q1 et le fil neutre (ou phase2) (une division pour la deuxième courbe représentant 50V).

La troisième courbe (Tension 3) représente la tension mesurée entre aux bornes de C5 (une division pour la troisième courbe représentant 5V).

La quatrième courbe (Tension 4) représente la tension mesurée aux bornes de R6 (charge) (une division pour la quatrième courbe représentant 5V).

On peut constater que, par comparaison avec la tension d'entrée alternative, la tension à la source de Q1 a été redressée et abaissée.

Par comparaison avec la tension à la source de Q1, la tension aux bornes de C5 est lissée.

Enfin, la tension en sortie du schéma de circuit de la Figure 1 (aux bornes de R6) est continue.

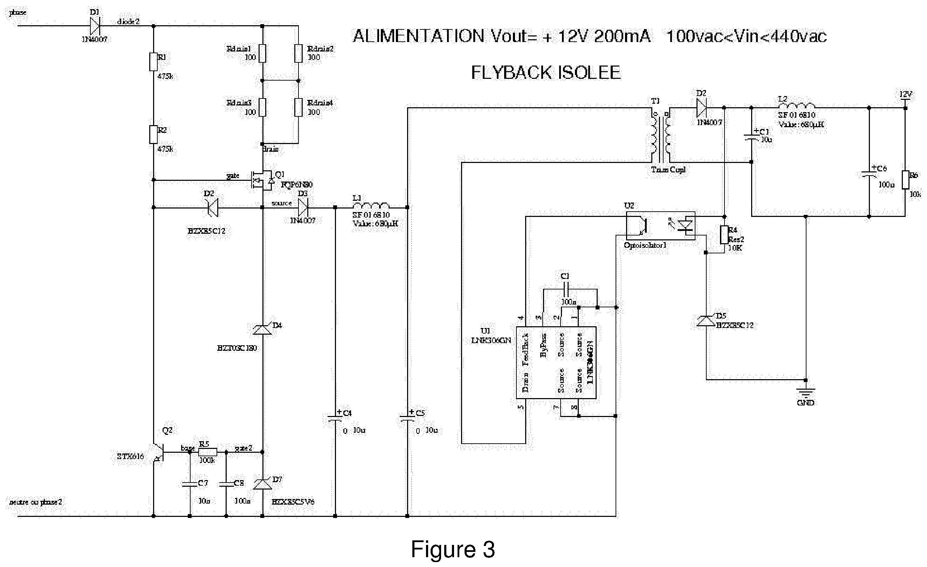

La Figure 3 représente une mise en oeuvre du circuit de l'invention en topologie isolée, de type configuration Flyback.

Comme pour la Figure 1, on peut distinguer trois étages fonctionnels.

Un premier étage fonctionnel du schéma de circuit de la Figure 3 comprend la diode D1, les résistances R1, R2, les résistances Rdrain1, Rdrain2, Rdrain3 et Rdrain4, le transistor MOS Q1, les diodes Zener D2, D4 et D7, le transistor bipolaire Q2, la résistance R5 et les condensateurs C4, C7 et C8.

Un deuxième étage fonctionnel du schéma de circuit comprend la diode D3, la bobine d'inductance L1 et le condensateur C5.

Un troisième et dernier étage fonctionnel comprend l'alimentation à découpage U1 en configuration Flyback et l'ensemble des autres composants du schéma de circuit de la Figure 3, dont le composant de couplage optique U2 et le transformateur T1.

Le fonctionnement du premier étage est identique au fonctionnement du premier étage en topologie non isolée expliqué plus haut.

Le deuxième étage (L1, C5 et D3) est identique au fonctionnement du deuxième étage expliqué en relation avec la Figure 1, et sert de filtre pour lisser la tension aux bornes de C5, la diode D3 évitant une décharge de C4 lors d'une alternance négative de la tension d'entrée du circuit.

Le dernier étage est une alimentation à découpage isolée de type Flyback classique, avec l'élément de couplage optique U2 qui permet l'isolation entre le primaire et le secondaire du transformateur T1. Le circuit intégré utilisé est identique au circuit intégré du circuit en topologie non isolée.

Cette configuration Flyback permet, de manière classique, d'isoler la charge par rapport à l'entrée.

## Revendications

1. Convertisseur CA/CC, convertissant une tension alternative délivrée entre une première phase et une deuxième phase d'une source de tension alternative connectée en entrée du convertisseur CA/CC en une tension continue appliquée à une charge (R6) connectée en sortie du convertisseur CA/CC, ledit convertisseur CA/CC comprenant une alimentation à découpage (U1) connectée en sortie à la charge (R6) et délivrant à celle-ci une tension continue, le convertisseur CA/CC comprenant en outre un étage redresseur, abaisseur, hacheur connecté en amont de l'alimentation à découpage (U1), ledit étage redresseur, abaisseur, hacheur étant connecté en entrée à la source de tension alternative et en sortie à l'entrée de l'alimentation à découpage, ledit étage redresseur, abaisseur, hacheur fournissant à l'alimentation à découpage une tension redressée, abaissée et hachée par rapport à la tension alternative d'entrée,
l'étage redresseur, abaisseur, hacheur comprenant un premier élément de commutation (Q1) de type transistor MOS, thyristor ou transistor bipolaire pour hacher de la tension alternative d'entrée fournie par la source de tension alternative d'entrée, une première diode (D1) reliée à la première phase de la source de tension alternative d'entrée pour redresser par blocage de l'alternance négative la tension alternative d'entrée fournie par la source de tension alternative d'entrée, un condensateur (C4) étant connecté entre la sortie du premier élément de commutation (Q1) dans l'étage redresseur, abaisseur, hacheur et la deuxième phase de la source de tension alternative d'entrée pour lisser la tension en sortie de l'étage redresseur, abaisseur, hacheur, une seconde diode (D3) étant connectée entre la sortie du premier élément de commutation et le condensateur (C4) connecté en sortie du premier élément de commutation (Q1), ladite seconde diode (D3) étant passante lors d'une alternance positive de la tension fournie par la source de tension alternative d'entrée et bloquée lors d'une alternance négative de la tension fournie par la source de tension alternative d'entrée, **caractérisé par le fait que** :
- une ou des résistances (Rdrain1, Rdrain2, Rdrain3, Rdrain4) sont connectées entre la première diode (D1) et l'entrée du premier élément de commutation (Q1) ; et
- une diode Zener (D4) est connectée entre la sortie du premier élément de commutation (Q1) et la base d'un transistor bipolaire (Q2), dont le collecteur est connecté à la borne de commande du premier élément de commutation (Q1) et l'émetteur est connecté à la deuxième phase de la source de tension alternative d'entrée, de telle sorte que, lorsque la tension aux bornes du condensateur (C4) connecté en sortie du premier élément de commutation (Q1) est supérieure à la tension Zener de ladite diode Zener (D4) plus la tension base-émetteur du transistor bipolaire (Q2), le transistor bipolaire (Q2) est saturé et fait passer le premier élément de commutation (Q1) à l'état bloqué.

2. Convertisseur CA/CC selon la revendication 1, **caractérisé par le fait qu'**il comprend en outre un étage intermédiaire de filtre de type bobine d'inductance et condensateur (L1-C5) entre la sortie de l'étage redresseur, abaisseur, hacheur et l'entrée de l'alimentation à découpage pour lisser la tension en sortie de l'étage redresseur, abaisseur, hacheur.

3. Convertisseur CA/CC selon l'une des revendications 1 ou 2, **caractérisé par le fait que** l'alimentation à découpage est de type à topologie isolée ou à topologie non isolée.

4. Convertisseur CA/CC selon la revendication 3, **caractérisé par le fait que** l'alimentation à découpage (U1) est en topologie isolée, comprenant un transformateur (T1) isolant l'entrée et la sortie de l'alimentation à découpage (U1), et un élément de couplage optique (U2) isolant les côtés primaire et secondaire du transformateur (T1).

## Patentansprüche

1. Wechselstrom-Gleichstrom-Wandler, der eine Wechselspannung, die zwischen einer ersten Phase und einer zweiten Phase einer Quelle von Wechselspannung geliefert wird, die am Eingang des Wechselstrom-Gleichstrom-Wandlers angeschlossen ist, in eine Gleichspannung umwandelt, die auf eine Ladung (R6) angebracht wird, die am Ausgang des Wechselstrom-Gleichstrom-Wandlers angeschlossen ist, wobei der Wechselstrom-Gleichstrom-Wandler ein Schaltnetzteil (U1) umfasst, der am Ausgang der Ladung (R6) angeschlossen ist und an letztere Gleichspannung liefert, wobei der Wechselstrom-Gleichstrom-Wandler außerdem eine Gleichrichterstufe mit Reduktor und Zerhacker umfasst, die dem Schaltnetzteil (U1) vorgeschaltet ist,
wobei die Gleichrichterstufe mit Reduktor und Zerhacker am Eingang der Quelle von Wechselspannung und am Ausgang des Eingangs des Schaltnetzteils angeschlossen ist und die Gleichrichterstufe mit Reduktor und Zerhacker an das Schaltnetzteil eine gleichgerichtete, abgesenkte und zerhackte Spannung im Verhältnis zu der Eingangswechselspannung liefert,
wobei die Gleichrichterstufe mit Reduktor und Zerhacker ein erstes Schaltelement (Q1) vom Typ MOS-Transistor, Thyristor oder bipolarer Transistor umfasst, um von der Quelle von Eingangswechselspannung gelieferte Eingangswechselspannung zu zerhacken, eine erste Diode (D1), verbunden mit der ersten Phase der Quelle von Eingangswechselspannung, um durch Blockieren der negativen Halbwelle die von der Quelle von Eingangswechselspannung gelieferte Eingangswechselspannung gleichzurichten, wobei ein Kondensator (C4) zwischen dem Ausgang des ersten Schaltelements (Q1) in der Gleichrichterstufe mit Reduktor und Zerhacker und der zweiten Phase der Quelle von Eingangswechselspannung angeschlossen ist, um die Spannung am Ausgang der Gleichrichterstufe mit Reduktor und Zerhacker zu glätten, wobei eine zweite Diode (D3) zwischen dem Ausgang des ersten Schaltelements und dem Kondensator (C4) angeschlossen ist, der am Ausgang des ersten Schaltelements (Q1) angeschlossen ist, wobei die zweite Diode (D3) bei einer positiven Halbwelle der Spannung, die von der Quelle von Eingangswechselspannung geliefert wird, durchlassend, und blockiert bei einer negativen Halbwelle der Spannung, die von der Quelle von Eingangswechselspannung geliefert wird, **gekennzeichnet dadurch, dass**:
- einer oder mehrere Widerstände (Rdrain1, Rdrain2, Rdrain3, Rdrain4) zwischen der ersten Diode (D1) und dem Eingang des ersten Schaltelements (Q1) angeschlossen sind; und
- eine Zener-Diode (D4) zwischen dem Ausgang des ersten Schaltelements (Q1) und der Basis eines bipolaren Transistors (Q2) angeschlossen ist, dessen Kollektor an die Steueranschlussklemme des ersten Schaltelements (Q1) angeschlossen ist, und der Emitter ist an die zweite Phase der Quelle von Eingangswechselspannung angeschlossen, so dass, wenn die Spannung an den Steueranschlüssen des Kondensators (C4), der am Ausgang des ersten Schaltelements (Q1) angeschlossen ist, höher ist als die Zener-Spannung der Zener-Diode (D4) plus die Basis-Emitter-Spannung des bipolaren Transistors (Q2), der bipolare Transistor (Q2) gesättigt ist und das erste Schaltelement (Q1) im blockierten Zustand durchgehen lässt.

2. Wechselstrom-Gleichstrom-Wandler nach Anspruch 1, **gekennzeichnet dadurch, dass** er außerdem eine Filterzwischenstufe vom Typ Induktionsspule und Kondensator (L1-C5) zwischen dem Ausgang der Gleichrichterstufe mit Reduktor und Zerhacker und dem Eingang des Schaltnetzteils umfasst, um die Spannung am Ausgang der Gleichrichterstufe mit Reduktor und Zerhacker zu glätten.

3. Wechselstrom-Gleichstrom-Wandler nach einem der Ansprüche 1 oder 2, **gekennzeichnet dadurch, dass** das Schaltnetzteil mit isolierter Topologie oder nicht isolierter Topologie ist.

4. Wechselstrom-Gleichstrom-Wandler nach Anspruch 3, **gekennzeichnet dadurch, dass** das Schaltnetzteil (U1) mit isolierter Topologie ist, mit einem Transformator (T1), der den Eingang und den Ausgang des Schaltnetzteils (U1) isoliert, und ein Element zur optischen Kopplung (U2), das die primäre und sekundäre Seite des Transformators (T1) isoliert.

## Claims

1. An AC/DC converter, converting an alternating current voltage provided between a first phase and a second phase of an alternating current voltage source connected to the input of the AC/DC converter into a direct-current voltage applied to a load (R6) connected to the output of the AC/DC converter, said AC/DC converter comprising a switched-mode power supply (U1) connected at its output to the load (R6) and supplying a direct-current voltage thereto, the AC/DC converter further comprising a rectifier, down-converter, chopper stage connected upstream from the switched-mode power supply (U1), said rectifier, down-converter, chopper stage being connected at its input to the alternating current voltage source and at its output to the input of the switched-mode power supply, said rectifier, down-converter, chopper stage providing the switched-mode power supply with a rectified, down-converted and chopped voltage with respect to the input alternating current voltage,
the rectifier, down-converter, chopper stage comprising a first MOS transistor, thyristor or bipolar transistor-type switching element (Q1) for chopping the input alternating current voltage provided by the input alternating current voltage source, a first diode (D1) connected to the first phase of the input alternating current voltage source for rectifying, by blocking the negative alternation, the input alternating current voltage provided by the input alternating current voltage source, a capacitor (C4) being connected between the output of the first switching element (Q1) in the rectifier, down-converter, chopper stage and the second phase of the input alternating current voltage source to smooth the voltage at the output of the rectifier, down-converter, chopper stage, a second diode (D3) being connected between the output of the first switching element and the capacitor (C4) connected to the output of the first switching element (Q1), said second diode (D3) being conducting during a positive alternation of the voltage provided by the input alternating current voltage source and non-conducting during a negative alternation of the voltage provided by the input alternating current voltage source, **characterised in that**:
- one or several resistances (Rdrain1, Rdrain2, Rdrain3, Rdrain4) are connected between the first diode (D1) and the input of the first switching element (Q1); and
- a Zener diode (D4) is connected between the output of the first switching element (Q1) and the base of a bipolar transistor (Q2) whose collector is connected to the control terminal of the first switching element (Q1) and whose emitter is connected to the second phase of the input alternating current voltage source, such that, when the voltage accross the capacitor (C4) connected to the output of the first switching element (Q1) is higher than the Zener voltage of said Zener diode (D4) plus the base-emitter voltage of the bipolar transistor (Q2), the bipolar transistor (Q2) is saturated and switches off the first switching element (Q1).

2. The AC/DC converter according to claim 1, **characterised in that** it further comprises an inductance coil and capacitor-type filter intermediate stage (L1-C5) between the output of the rectifier, down-converter, chopper stage and the input of the switched-mode power supply to smooth the voltage at the output of the rectifier, down-converter, chopper stage.

3. The AC/DC converter according to one of claims 1 or 2, **characterised in that** the switched-mode power supply is of insulated topology or non-insulated topology type.

4. The AC/DC converter according to claim 3, **characterised in that** the switched-mode power supply (U1) is in insulated topology, comprising a transformer (T1) insulating the input and the output of the switched-mode power supply (U1), and an optical coupling element (U2) insulating the primary and secondary sides of the transformer (T1).
